# EUROPÄISCHE PATENTSCHRIFT

(11) **EP 0 970 553 B1**
(45) Veröffentlichungstag und Bekanntmachung des Hinweises auf die Patenterteilung: **29.08.2001**
(21) Anmeldenummer: 98924011.4
(22) Anmeldetag: 16.03.1998
(51) Int. Cl.: H02B 1/26, H02B 13/00

(54) **BEDIENVORRICHTUNG ZUR DURCHFÜHRUNG VON SCHALTHANDLUNGEN IN EINER SCHALTANLAGE**
OPERATING DEVICE FOR CARRYING OUT SWITCHING OPERATIONS IN A SWITCHING SYSTEM
UNITE DE COMMANDE POUR EFFECTUER DES OPERATIONS DE COMMUTATION DANS UNE INSTALLATION DE COMMUTATION

(30) Priorität: 27.03.1997 DE 19713119
(43) Veröffentlichungstag der Anmeldung: 12.01.2000
(73) Patentinhaber: SIEMENS AKTIENGESELLSCHAFT, 80333 München (DE)
(72) Erfinder: KOPKE, Volker, D-91054 Buckenhof (DE)
(86) Internationale Anmeldenummer: DE9800773
(87) Internationale Veröffentlichungsnummer: WO9844610

(56) Entgegenhaltungen:
- US-A- 5 233 511
- PATENT ABSTRACTS OF JAPAN vol. 18, no. 546 (P-1814), 18.Oktober 1994 & JP 06 195101 A (TOSHIBA CORP.), 15.Juli 1994,
- PATENT ABSTRACTS OF JAPAN vol. 15, no. 330 (E-1103), 22.August 1991 & JP 03 124225 A (HITACHI CABLE LTD), 27.Mai 1991,

## Beschreibung

Die Erfindung bezieht sich auf eine Bedienvorrichtung zur Durchführung von Schalthandlungen in einer Schaltanlage, insbesondere in einer Hoch- oder Mittelspannungsschaltanlage.

In Schaltanlagen eines Energieversorgungsnetzes sind häufig Schalthandlungen zum Versorgen oder Abschalten elektrotechnischer Baugruppen durchzuführen. Dabei sind aufgrund einer Mehrzahl von in einer Schaltanlage integrierter Funktionen Schalthandlungen in unterschiedlichem Umfang auszuführen. Eine derartige Schalthandlung ist z.B. das Ein- oder Ausschalten eines Leistungsschalters mit entsprechender Spannungszuführung bzw. Spannungsunterbrechung zu einem elektrischen Betriebsmittel. Eine weitere Schalthandlung ist das Öffnen oder Schließen eines Trennschalters mit entsprechendem Herstellen bzw. Schließen einer sicherheitstechnisch geforderten Trennstrecke. Ferner kann eine Schalthandlung das Einoder Ausschalten eines Erdungsschalters mit entsprechender Erdung und Kurzschließen eines Energieversorgungsabschnittes aus z.B. arbeitstechnischen Gründen sein.

Beim Bedienen einer derartigen Schaltanlage ist die Durchführung von Schalthandlungen in einer bestimmten Reihenfolge zwingend erforderlich. Diese Folge von Schalthandlungen wird auch als Schaltprogramm bezeichnet. Der Umfang eines solchen Schaltprogramms kann unterschiedlich sein und z.B. lediglich das Schalten des Leistungsschalters, des Trennschalters, des Erdungsschalters oder eine Kombination dieser Schalthandlungen umfassen. Dabei sind der Trennungs- und Erdungsfunktion besondere Bedingungen zugeordnet, wonach lediglich leistungslos getrennt bzw. spannungslos geerdet werden darf. Um diese Bedingungen jederzeit zu gewährleisten, werden verschiedene Verriegelungssysteme zwischen den Funktionen angewandt.

Um Mittelspannungsschaltanlagen bedienen zu können, fordert die deutsche Norm (DIN VDE, IEC) die Ausbildung der Bedienenden zu Schaltberechtigten, die somit diese Schalthandlungen durchführen dürfen. Zur Überwachung der jeweiligen Betriebszustände dient eine Mechanik oder Sekundärtechnik, die die Schalterstellungen erfaßt und eine entsprechende Meldung generiert. Dabei können die Schalthandlungen manuell vor Ort oder Ferngesteuert durchgeführt werden, wobei die Erdung üblicherweise vor Ort durchgeführt wird. Bedienfehler bei der manuellen Durchführung von Schalthandlungen können sich mit hohem Personen- und Anlagenschaden auswirken.

Aus der JP-A-06 195 101 (Abstract) ist eine Bedienvorrichtung zur Steuerung eines Gerätes in einer Anlage mit einer magnetischen Speicherkarte entnehmbar. Die Speicherkarte dient der Speicherung von Bedieninformationen und von Anlagensteuerinformationen, mit denen allgemein ein Freigabesignal und ein Steuersignal für das Gerät erzeugbar sind.

Aus der US-PS 5,233,511 ist ein System zur Fernsteuerung von Unterbrechern für eine zeitweise Unterbrechung einer elektrischen Energieversorgung bei Spitzenlastzeiten und zur programmierbaren Beleuchtungskontrolle für Industriestandorte, also in einem Niederspannungsnetz, bekannt. Das system weist einen Schlüsselkartenmechanismus mit einem automatischen Interpreter auf, mit dem eine auf einer Schlüsselkarte eingebrachte codierte Nachricht interpretiert werden kann, wodurch gegebenenfalls einem Bediener Zugang zur Kontrolle der Unterbrecher ermöglicht. Der Schlüsselkartermechanismus dient der Verhinderung, eines unautorisierten Zugriffs zu Programmierfunktionen des Systems. Die codierte Nachricht ist auf der Schlüsselkarte in Form eines Lochmusters abgelegt, das in einem Kartenlesegerät optisch erfaßt wird.

Aus dem Prospekt der Firma Siemens AG, "Schaltfehlerschutz 8 TK", 1985, Best.Nr. A19100-E135-B283, ist ein sogenanntes Schaltefehlerschutzgerät für Hoch- und Mittelspannungsanlagen bekannt, das unter anderem zur manuellen Bedienung der Schaltgeräte dient. Dabei werden die manuell ausgeführten Schalthandlungen entsprechend vorgebbarer Verriegelungsbedingungen auf ihre Zulässickeit überwacht. Prinzipiell können uber verschiedene Tasten diese Verriegelungsbedingungen außer Kraft gesetzt werden. Zur Berechtigung der Bedienung des Schaltfehlerschutzgerätes konnen entsprechende schlüsselschalter vorgesehen sein, die entsprechend einer Schaltberechtigung die Betätigung des Gerätes freigeben.

Der Erfindung liegt die Aufgabe zugrunde, eine Bedienvorrichtung mit einem besonders hohen Zuverlässigkeits- und Automatisierungsgrad bei der Durchführung von Schalthandlungen einer Schaltanlage anzugeben.

Diese Aufgabe wird erfindungsgemäß gelost durch eine Anlage mit den Merkmalen des Patentanspruchs 1.

Durch den Einsatz einer solchen Speicherkarte oder Schaltkarte kann die Durchführung der Schaltprogramme praktisch fehlerfrei und damit besonders sicher automatisch angestoßen, überwacht und entsprechend dokumentiert werden. Gleichzeitig kann diese Schaltkarte die Funktion der Berechtigtenregelung übernehmen. Schalthandlungen können somit unabhängig von einer Berechtigteregelung allein durch den Inhaber der Speicherkarte vorgenommen werden. Somit kann eine Vereinheitlichung der Ausführung der Verriegelungstechnik bewirkt werden.

In zweckmäßiger Ausgestaltung weist die Speicherkarte einen auslesbaren Speicher für ein Schaltprogramm mit einer Anzahl von eine Folge von Schalthandlungen repräsentierenden Steuerdaten auf. Zum Auslesen der Steuerdaten für den oder jeden Schalter der Schaltanlage ist die Speicherkarte zweckmäßigerweise einem in einer Bedienoberfläche der Schaltanlage vorgesehenen Kartenlesegerat zuführbar, wobei auch mehrere Bedienoberflächen mit zugehörigen Kartenlesegeräten vorgesehen sein können. Die Durchführung der Schalthandlungen erfolgt dann durch Absenden der gespeicherten Steuerdaten über zu den Schaltern der Schaltanlage geführten Steuerleitungen, die mit dem Kartenlesegerät verbunden sind. Die Steuerdaten lösen dabei z.B. Hilfsspannungen für den jeweiligen Schaltvorgang aus. Gleichzeitig kann jede durchgeführte Schalthandlung durch Visualisierung der jeweiligen Schalterstellung auf dem Bedienfeld angezeigt werden. Außerdem können die anhand der Speicherkarte durchgeführten Schalthandlungen mittels eines Ausgabegerätes, z.B. eines Druckers, vor Ort protokolliert werden.

Die Speicherkarte ist zweckmäßigerweise programmierbar. Dazu ist ein Schaltprogramm mit einer bestimmten Abfolge von Schalthandlungen in die Speicherkarte einschreibbar. Durch erneute Programmierung kann das gespeicherte Schaltprogramm mit einem neuen Schaltprogramm überschrieben werden. Wesentlich ist dabei die Programmierung der jeweils durchzuführenden Schalthandlung, wie insbesondere das Schalten eines Leistungsschalters, eines Trennschalters und/oder eines Erdungsschalters, in einer bestimmten Reihenfolge. Dabei sind beliebige Kombinationen von einzelnen Schalthandlungen programmierbar. Weitere Informationen, insbesondere eine Kodierung anlagenzugeordneter Baugruppen oder Anlagenabschnitte, ein bestimmtes Datum und/oder eine bestimmte Uhrzeit, können in die Speicherkarte als zusätzliche Speicherdaten einprogrammiert werden.
Die Speicherkarte dient außerdem vorteilhafterweise auch als Zugangsberechtigung in die Schaltanlage, wobei dann als weitere Information ein Türöffnercode für die Schaltanlagentür in die Speicherkarte eingeprägt wird. Der Programmiervorgang wird durch ein automatisches Beschreiben der Speicherkarte mittels eines Computers oder Rechners durchgeführt und mit dem für den jeweiligen Zweck erforderlichen Schaltprogramm beendet.

Die mit der Erfindung erzielten Vorteile bestehen insbesondere darin, daß durch den Einsatz einer elektronischen Speicherkarte zur veränderbaren Speicherung von die oder jede Schalthandlung automatisch auslösenden Steuerdaten bei gleichzeitig besonders geringem zeitlichem und personellem Aufwand und einem hohen Maß an Sicherheit eine erleichterte Bedienung gewährleistet ist. Fehlbedienungen sind dadurch praktisch ausgeschlossen. Ferner sind ein hohes Maß an Standardisierung und eine hohe Geschwindigkeit der Arbeitsabläufe auch bei größeren Strecken erzielt, wobei auch eine einheitliche und zuverlässige Dokumentierung der Schaltvorgänge (Verantwortlichkeit) möglich ist.

Ein spezieller Anwendungsfall für die Erfindung betrifft das Vergeben einer Schaltberechtigung an betriebsfremde Personen. Soll z.B. ein Wartungstechniker bei der Überprüfung eines Schaltgeräts dieses auch bedienen dürfen, so ist es denkbar, daß mit der Speicherkarte lediglich die speziellen für die Wartung benötigten Schalthandlungen mit der Speicherkarte aktivierbar sind. Es kann sich z.B. dabei um eine Bedienfreigabe für eine manuelle Betätigung eines speziellen Schaltgeräts, die Aktivierung einer vorgegebenen Schaltfolge oder auch die direkte Auslösung einer speziellen Schalthandlung handeln. Dabei kann auch unter Umständen eine Information über die Häufigkeit der erlaubten Schalthandlung abgelegt sein. Grundgedanke ist dabei, daß im Gegensatz zu einem herkömmlichen Schaltfehlerschutzgerät, das bestimmte Schalthandlungen verbietet, mittels der Speicherkarte nur bestimmte Aktionen aktivierbar sind oder speziell die Aktivierung durch die Speicherkarte ausgelöst wird. Mit Vorteil läßt sich dabei neben der Bedienberechtigung natürlich auch eine Zugangsberechtigung auf der Speicherkarte ablegen. Die neue Bedienvorrichtung kann dem Schaltfehlerschutzgerät auch vorgeschaltet oder mit diesem kombiniert sein, so daß die Sicherheitsüberprüfung des Schaltfehlerschutzes zusätzlich noch besteht.

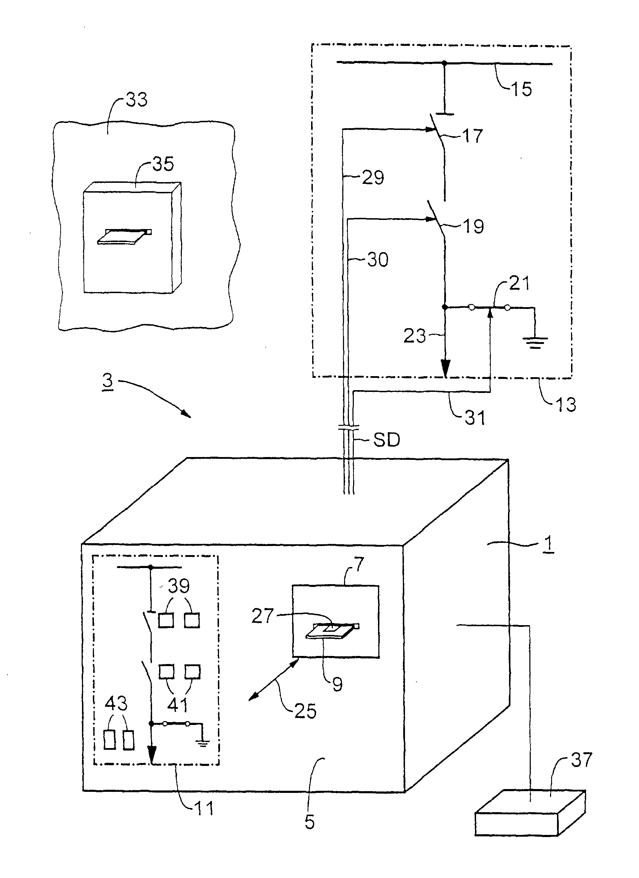

Ein Ausführungsbeispiel der Erfindung wird anhand einer Zeichnung näher erläutert. Darin zeigt die Figur schematisch eine Bedienvorrichtung mit einer elektronischen Speicherkarte zur Durchführung von Schalthandlungen einer Schaltanlage.

Die in der Figur dargestellte Bedienvorrichtung 1 für eine Schaltanlage 3, z.B. für eine Mittelspannungsschaltanlage, enthält in einer Bedienoberfläche 5 ein Karteniesegerät 7 zur Aufnahme einer elektronischen Speicherkarte 9 und ein Bedienfeld 11, das ein Schaltfeld 13 der Schaltanlage 3 symbolisiert. In der Schaltanlage 3 können auch mehrere Bedienoberflächen mit entsprechenden Kartenlesegeräten vorgesehen sein.

Das Schaltfeld 13 ist aus einem an eine Sammelschiene 15 angeschlossenen Trennschalter 17 und einem diesem nachgeschalteten Leistungsschalter 19 sowie einem Erdungsschalter 21 aufgebaut. Der Leistungsschalter 19 und der Erdungsschalter 21 führen an einen Abgang 23 der Schaltanlage 3 für (nicht dargestellte) elektrotechnische Baugruppen eines Energieversorgungsnetzes.

Das Bedienfeld 11 der Bedienoberfläche 5 zeigt zur Überwachung des Betriebszustandes der Schaltanlage 3 die Stellungen der Schalter 17 bis 21 an. In den dargestellten Schalterstellungen können Arbeiten an einer an den Abgang 23 angeschlossene Baugruppe durchgeführt werden. Dazu wird zunächst der Leistungsschalter 19 in die dargestellte Stellung "AUS" geschaltet und die Spannung zum Betriebsmittel oder zur Baugruppe unterbrochen. Anschließend wird der Trennschalter 17 geöffnet (Stellung "AUS") und eine sicherheitstechnisch geforderte Trennstrecke hergestellt. Außerdem wird aus arbeitstechnischen Gründen durch Schalten des Erdungsschalters 21 in die Stellung "EIN" ein die Baugruppe umfassender Streckenabschnitt kurzgeschlossen und geerdet.

Die Bedienung der Schaltanlage 3 erfolgt mittels der elektronischen Speicherkarte 9. Dazu wird die Speicherkarte 9 in Einschubrichtung 25 in das Kartenlesegerät 7 eingeführt. Anschließend erfolgt ein automatischer Ablauf der gewünschten Schalthandlungen. Dazu werden aus einem Speicher 27 der Speicherkarte 9 entsprechende Steuerdaten SD ausgelesen und in Form von Hilfsspannungen über Steuerleitungen 29,30 und 31 an die jeweiligen Schalter 17,19 bzw. 31 geführt. Die Schalthandlungen werden als Abfolge in einer bestimmten, vorgegebenen Reihenfolge anhand eines der Speicherkarte 9 aufgeprägten Schaltprogrammes durchgeführt. Die Programmierung der Speicherkarte mit einem solchen Schaltprogramm, d.h. mit einer bestimmten Abfolge von Schalthandlungen, erfolgt in nicht näher dargestellter Art und Weise zweckmäßigerweise mit einem Computer oder einer Rechneranlage. Dieselbe Speicherkarte 9 kann zur Programmierung verschiedener Schaltprogramme herangezogen werden, indem in den Speicher 27 der Speicherkarten 9 neue Steuerdaten SD eingeschrieben werden.

Die Speicherkarte 9 dient zweckmäßigerweise auch als Zugangsberechtigung für die Schaltanlage 3. Dazu ist an oder in der Nähe einer nur ausschnittweise dargestellten Schaltanlagentür 33 ein weiteres Kartenlesegerät 35 vorgesehen. Das gespeicherte Programm der Speicherkarte 9 ist dann entsprechend um einen Türöffnercode für die Schaltanlagentür 33 erweitert.

Ein an die Bedienoberfläche 5 angeschlossenes Ausgabegerät in Form eines Druckers 37 dient zur Aufzeichnung und Protokollierung aller durchgeführten Schalthandlungen, beginnend z.B. mit dem Betreten der Schaltanlage 3 und endend mit dem Verlassen des Raumes zur Durchführung der Schalthandlungen.

Zur Durchführung von Schalthandlungen in der Schaltanlage (3) ist daher lediglich eine einzelne, programmierbare elektronische Speicherkarte (9) zur veränderbaren Speicherung von die oder jede Schalthandlung automatisch auslösenden Steuerdaten (SD) erforderlich. Die Bedienung erfolgt dann ausschließlich über die Speicherkarte (9), indem diese in das Kartenlesegerät (7) der Schaltanlage (3) eingeführt wird. Danach erfolgt ein automatischer Ablauf der gewünschten Schalthandlungen anhand eines zuvor in die Speicherkarte (9) eingespeicherten Schaltprogramms.

Der mit dem Einstecken der Speicherkarte 9 in das Kartenlesegerät 7 erfolgende automatische Ablauf der in die Speicherkarte 9 einprogrammierten Schalthandlungen kann in dem Bedienfeld 11 überwacht werden, wobei jede durchgeführte Schalthandlung visualisiert wird. Da die Speicherkarte zweckmäßigerweise jeweils nur ein bestimmtes Schaltprogramm enthält und somit weitere Schalthandlungen nicht möglich sind, ist eine Fehlbedienung praktisch ausgeschlossen. Für den Fall einer Störung im automatischen Bedienablauf sind auf dem Bedienfeld 11 zusätzlich Bedientasten 39,41 und 43 zum mechanischen Ein- und Ausschalten des jeweiligen Schalters 17,19 bzw. 31 vorgesehen.

## Patentansprüche

1. Bedienvorrichtung zur Steuerung eines Gerätes in einer Anlage mit einer Speicherkarte zur Speicherung von Bedieninformationen und von Anlagensteuerinformationen, mit denen ein Freigabesignal und ein Steuersignal für das Gerät erzeugbar sind,
**dadurch gekennzeichnet,** daß
a) die Anlage als Hochspannungsschaltanlage oder Mittelspannungsschaltanlage auagebildet ist, die gegebenenfalls weitere Geräte aufweist,
b) jedes Gerät als Leistungsschalter, Trennschalter oder Erdungsschalter ausgebildet ist und innerhalb eines Schaltfeldes der Anlage angeordnet ist,
c) die Speicherkarte als elektronische Speicherkarte ausgebildet ist,
d) die auf der Speicherkarte gespeicherten Bedieninformationen. eine Bedienberechtigung repräsentieren,
e) die auf der Speicherkarte gespeicherten Anlagensteuerinformationen ein Schaltprogramm mit einer Anzahl von eine Abfolge von Schalthandlungen repräsentierenden Steuerdaten bilden, wobei
f) anhand der Steuerdaten für zumindest ein Gerät automatisch Steuersignale zur Auslösung einer Schalthandlung oder mehrerer Schalthandlungen innerhalb des Schaltfeldes erzeugbar sind.

2. Bedienvorrichtung nach Anspruch 1, wobei die Speicherkarte (9) einen auslesbaren Speicher (27) für die Steuerdaten (SD) aufweist.

3. Bedienvorrichtung nach Anspruch 1 oder 2, wobei die Speicherkarte (9) zum Auslesen der Steuerdaten (SD) für mindestens einen Schalter (17, 19, 21) einem in einer Bedienoberfläche (5) der Schaltanlage (3) vorgesehenen Kartenlesegerät (7) zuführbar ist, wobei das Kartenlesegerät (7) über eine Steuerleitung (29, 30, 31) mit dem oder jedem Schalter (17, 19, 21) der Schaltanlace (3) verbunden ist.

4. Bedienvorrichtung nach einem der Ansprüche 1 bis 3, wobei jede durchgeführte Schalthandlung durch Visualisierung der jeweiligen Schalterstellung auf einem Bedienfeld (11) anzeigbar ist.

5. Bedienvorrichtung nach einem der Ansprüche 1 bis 4, wobei jede anhand der Speicherkarte (9) durchgeführte Schalthandlung mittels eines Ausgabegerates (37) protokollierbar ist.

6. Bedienvorrichtung nach einem der Ansprüche 1 bis 5, wobei die Speicherkarte (9) mit einer Abfolge von Schalthandlungen programmierbar ist.

7. Bedienvorrichtung nach einem der Ansprüche 1 bis 6, wobei die Speicherkarte (9) zusätzlich als Zugangsberechtigung in die Schaltanlage (3) vorgesehen ist.

## Claims

1. Control apparatus for controlling a device in an assembly having a memory card for storing control information and assembly control information which can be used to produce an enable signal and a control signal for the device,
**characterized in that**
a) the assembly is in the form of a high-voltage switchgear assembly or medium-voltage switchgear assembly, possibly having other devices,
b) each device is in the form of a circuit-breaker, switch-disconnector or earthing switch and is arranged within a switch panel of the assembly,
c) the memory card is in the form of an electronic memory card,
d) the control information stored on the memory card represents a control authorization,
e) the assembly control information stored on the memory card forms a switching program having a number of control data items representing a sequence of switching operations, wherein
f) the control data items can be used for automatically producing control signals for at least one device in order to initiate a switching operation or a plurality of switching operations within the switch panel.

2. Control apparatus according to Claim 1, wherein the memory card (9) has a memory (27) which can be read from for the control data items (SD).

3. Control apparatus according to Claim 1 or 2, wherein the memory card (9) for reading out the control data (SD) for at least one switch (17, 19, 21) can be inserted in a card reader (7) which is provided in a control interface (5) of the switchgear assembly (3), wherein the card reader (7) is connected via a control line (29, 30, 31) to the switch, or each switch (17, 19, 21), of the switchgear assembly (3).

4. Control apparatus according to one of Claims 1 to 3, wherein each switching operation carried out can be indicated on a control panel (11) by visualization of the respective switch position.

5. Control apparatus according to one of Claims 1 to 4, wherein each switching operation carried out using the memory card (9) can be recorded by means of an output device (37).

6. Control apparatus according to one of Claims 1 to 5, wherein the memory card (9) can be programmed with a sequence of switching operations.

7. Control apparatus according to one of Claims 1 to 6, wherein the memory card (9) is additionally intended for use as access authorization to the switchgear assembly (3).

## Revendications

1. Dispositif de commande pour commander un appareil dans une installation par une carte à mémoire servant à mettre en mémoire des informations de manipulation et des informations de commande d'installation par lesquelles un signal de libération et un signal de commande peuvent être produits pour l'appareil,
**caractérisé en ce que**
a) l'installation est réalisée en installation de coupure haute tension ou en installation de coupure moyenne tension, qui comporte le cas échéant des appareils supplémentaires,
b) chaque appareil est réalisé en disjoncteur, en sectionneur, ou en interrupteur de mise à la terre et est monté à l'intérieur d'une zone de couplage de l'installation,
c) la carte à mémoire est réalisée en carte à mémoire électronique,
d) les informations de manipulation mises en mémoire sur la carte à mémoire représentent une autorisation de manipulation,
e) les informations de commande d'installation mises en mémoire sur la carte à mémoire forment un programme de commutation comportant une pluralités de données de commande représentant une succession d'opérations de commutation,
f) des signaux de commande servant à déclencher une opération de commutation ou plusieurs opérations de commutation à l'intérieur de la zone de couplage peuvent être produits automatiquement à l'aide des données de commande pour au moins un appareil.

2. Dispositif de commande suivant la revendication 1, la carte (9) à mémoire comportant une mémoire (27) pouvant être lue pour les données (SD) de commande.

3. Dispositif de commande suivant la revendication 1 ou 2, la carte (9) à mémoire pouvant être envoyée pour l'extraction des données (SD) de commande pour au moins un commutateur (17, 19, 21) à un appareil (7) de lecture de carte prévue dans une interface (5) machine-utilisateur de l'installation (3) de coupure, l'appareil (7) de lecture de carte étant relié par l'intermédiaire d'une ligne (29, 30, 31) de commande au commutateur ou à chaque commutateur (17, 19, 21) de l'installation (3) de coupure.

4. Dispositif de commande suivant l'une des revendications 1 à 3, chaque opération de commutation effectuée pouvant être affichée sur une zone (11) d'interface homme-machine par visualisation de la position du commutateur associée.

5. Dispositif de commande suivant l'une des revendications 1 à 4, chaque opération de commutation effectuée à l'aide de la carte (9) à puce pouvant être mise en liste au moyen d'un appareil (37) de sortie.

6. Dispositif de commande suivant l'une des revendications 1 à 5, la carte (9) à mémoire pouvant être programmée par une succession d'opérations de commutation.

7. Dispositif de commande suivant l'une des revendications 1 à 6, la carte (9) à mémoire étant prévue de plus comme autorisation d'accès à l'installation (3) de coupure.
